# EUROPEAN PATENT APPLICATION

(11) **EP 4 696 189 A1**
(43) Date of publication of application: **18.02.2026**
(21) Application number: 24853423.2
(22) Date of filing: 05.07.2024
(51) Int. Cl.: A45D 33/00, A45D 34/00, A45D 40/00, C08L 75/04

(54) **IMITATION LEATHER DECORATIVE MEMBER AND PREPARATION METHOD THEREFOR, AND COSMETIC CONTAINER**

(30) Priority: 16.08.2023 CN 202311034081
(71) Applicant: Shya Hsin Packaging Industry (China) Co., Ltd., Suzhou, Jiangsu 215300 (CN)
(72) Inventor: LI, Jiahao, Suzhou, Jiangsu 215300 (CN)
(74) Representative: Bayramoglu et al.
(86) International application number: PCT/CN2024/103862
(87) International publication number: WO 2025/036008

(57) **Abstract**

The present disclosure provides a faux leather decoration and a preparation method thereof, and a cosmetic container. The faux leather decoration is disposed on a surface of a cosmetic container; and components of the faux leather decoration include a thermoplastic polyurethane (TPU) elastomer. The faux leather decoration in the present disclosure exhibits a leather-like appearance and a leather-like tactile feel, and is attached to the surface of the cosmetic container, which not only protects the cosmetic container, but also delivers a leather-like visual impression to improve the grade of the product.

## Description

### TECHNICAL FIELD

The present disclosure relates to the field of cosmetic packaging materials, and in particular to a faux leather decoration and a preparation method thereof, and a cosmetic container.

### BACKGROUND TECHNOLOGY

Cosmetics, as daily consumables, are widely used by people. With the development of society and the constant advancement of people's aesthetic standards, the pursuit of fashion and novelty has become an eternal topic, and people's requirements for cosmetic containers have also shifted from traditional economy and practicality to high-end style and fashion. Therefore, to meet this demand of consumers, faux leather patches are usually attached to the cosmetic containers. However, existing faux leather patches are made by laminating and pressing multiple layers of materials, which leads to high costs and is not conducive to large-scale production. Moreover, the multiple layers of materials tend to peel off easily, which affects the visual effect.

### CONTENT OF THE INVENTION

In order to overcome the above defects, the present disclosure provides a faux leather decoration. The faux leather decoration exhibits a leather-like appearance and a leather-like tactile feel, and is attached to a surface of a cosmetic container, which not only protects the cosmetic container, but also delivers a leather-like visual impression to improve the grade of the product.

To solve the technical problems, the present disclosure employs the following technical solutions:
The present disclosure provides a faux leather decoration, where the faux leather decoration is disposed on a surface of a cosmetic container; and components of the faux leather decoration include a thermoplastic polyurethane (TPU) elastomer.

Optionally, the faux leather decoration includes following components in parts by weight: 84-99.5 parts of the TPU elastomer, 0.05-0.5 parts of an antioxidant, and 0.05-0.5 parts of a lubricant.

Optionally, the TPU elastomer includes following components in parts by weight: 60-80 parts of a polyol, 16-31 parts of an isocyanate, and 3.5-9 parts of a chain extender.

Optionally, the TPU elastomer has a Shore hardness of 63-69 A.

Optionally, the TPU elastomer has a 100% modulus of greater than or equal to 2 MPa, and a 300% modulus of greater than or equal to 4 MPa.

Optionally, an elongation at break of the TPU elastomer is greater than or equal to 400%.

Optionally, the TPU elastomer has a tensile strength of greater than or equal to 10 MPa.

Optionally, the TPU elastomer has a density of 1.0-1.4 g/cm³.

Optionally, the TPU elastomer has a tear strength of greater than or equal to 40 kN/m.

Optionally, the TPU elastomer has a glass transition temperature (Tg) of -45°C to -40°C.

Optionally, the components further include 0.3-10 parts by weight of color masterbatch.

Optionally, the components further include 1-15 parts by weight of a polyolefin.

Optionally, the polyolefin includes at least one of polypropylene (PP), polyethylene (PE), a polyolefin elastomer (POE), an ethylene-vinyl acetate copolymer (EVA), and methyl methacrylate (MMA).

Optionally, the components further include 0.1-0.5 parts by weight of an anti-tack agent.

Optionally, the components further include 8 parts by weight of PE.

Optionally, the components further include 10 parts by weight of PE.

Optionally, the components further include 10 parts by weight of PE and 5 parts by weight of universal black masterbatch.

Optionally, the components further include 5 parts by weight of a POE and 5 parts by weight of PE.

The present disclosure further provides a cosmetic container, including the faux leather decoration, where the faux leather decoration is attached to an assembly surface of the cosmetic container; and the assembly surface includes a flat surface or a curved surface.

Optionally, the faux leather decoration is assembled to the assembly surface of the cosmetic container by bonding, snap-fitting, or hot-pressing.

Optionally, the faux leather decoration includes a decoration body; the decoration body includes a decorative portion; and the decorative portion includes at least one of a protrusion, a groove, and a stitch line.

Optionally, a cavity is formed between the decoration body and the assembly surface of the cosmetic container.

Optionally, a soft filler is provided in the cavity.

Optionally, the decoration body corresponding to the cavity is of a protruding arc-shaped structure; and for any two points on the decoration body corresponding to the cavity, if thicknesses of the decoration body at the two points are respectively D1 and D2, a difference between the D1 and the D2 is less than a tolerance of the decoration body.

The present disclosure further provides a preparation method of the faux leather decoration, including following steps:
preparation of TPU elastomer pellets: uniformly mixing raw materials, injecting a resulting mixture into a twin-screw extruder, and pelletizing the resulting mixture to obtain the TPU elastomer pellets, where the raw materials include the polyol, the isocyanate, and the chain extender; and
injection molding of the faux leather decoration: injecting the TPU elastomer pellets, the antioxidant, and the lubricant into an injection molding machine, and performing injection molding with the injection molding machine to obtain the faux leather decoration.

Optionally, the preparation of TPU elastomer pellets includes following steps:
material preparation: weighing the raw materials according to a formulated amount, where the raw materials include the polyol, the isocyanate, and the chain extender;
degassing: degassing the raw materials in a vacuum environment;
mixing: putting the raw materials into a high-speed mixer, uniformly stirring the raw materials to obtain the mixture, and drying the mixture; and
pelletization: adding a dried mixture through a main feeding hopper of the twin-screw extruder, and performing plasticization, extrusion, strand pulling, air drying, and pelletization to obtain the TPU elastomer pellets.

Optionally, the injection molding of the faux leather decoration includes following steps:
batching: weighing materials according to a formulated amount, where the materials include the TPU elastomer pellets, the antioxidant, and the lubricant;
injection into the injection molding machine: injecting the TPU elastomer pellets into the injection molding machine, and hot-melting the TPU elastomer pellets.
addition of auxiliary materials: adding the antioxidant to the injection molding machine and uniformly mixing; and then adding the lubricant to the injection molding machine and uniformly mixing to obtain a molten mixture; and
molding: injecting the molten mixture into a mold of the injection molding machine, and injection-molding the molten mixture to obtain the faux leather decoration.

Optionally, the materials further include at least one of the polyolefin, the color masterbatch, and the anti-tack agent; and during the injection into the injection molding machine, the at least one of the polyolefin, the color masterbatch, and the anti-tack agent is added to the injection molding machine, and hot-melted with the TPU elastomer pellets.

The present disclosure has following beneficial effects:
1) The decoration in the present disclosure is injection-molded with the TPU elastomer and chemical additives to form a single-layer integrated structure, which reduces the processing cost of the product, facilitates industrial large-scale production and recycling, and achieves energy saving and environmental protection.
2) The decoration in the present disclosure exhibits a leather-like appearance and a leather-like tactile feel, and is attached to the surface of the cosmetic container, which not only protects the cosmetic container, but also delivers a leather-like visual impression to improve the grade of the product. Compared with the conventional product made by pressing a silicone substrate and a surface faux leather, the decoration in the present disclosure has high hardness and strong toughness, and is more durable.
3) Compared with the multilayer pressed product, the decoration in the present disclosure does not suffer from surface layer peeling, with excellent elasticity. The surface of the decoration is finer and softer, with the leather-like elasticity and visual effect, as well as the improved hand feel.

### DESCRIPTION OF THE DRAWINGS

FIG. 1 is a first schematic structural view of a faux leather decoration according to the present disclosure;
FIG. 2 is a second schematic structural view of a faux leather decoration according to the present disclosure;
FIG. 3 is a third schematic structural view of a faux leather decoration according to the present disclosure; and
FIG. 4 is a schematic structural view of a cosmetic container according to the present disclosure.

In the figures: 100-decoration body, 110-first surface, 111-raised portion, 112-recessed portion, 113-decorative portion, 120-second surface, and 200-cosmetic container.

### SPECIFIC IMPLEMENTATIONS

The following describes the technical solutions in the embodiments of the present disclosure clearly and completely with reference to the embodiments of the present disclosure. Apparently, the embodiments described are merely some rather than all of the embodiments of the present disclosure. All other embodiments obtained by a person of ordinary skill in the art based on the embodiments of the present disclosure without creative efforts shall fall within the protection scope of the present disclosure.

It should be noted that the terms "first", "second" and so on in the description and claims of the present disclosure and in the above accompanying drawings are intended to distinguish similar objects but do not necessarily indicate a specific order or sequence. It should be understood that the objects used in such a way may be exchanged under proper conditions to make it possible to implement the described implementations of the present disclosure in sequences except those illustrated or described herein. Moreover, the terms "include", "have" and their variants mean to cover a non-exclusive inclusion. For example, a process, method, system, product or device that includes a list of steps or units is not necessarily limited to those steps or units which are clearly listed. Instead, they may include other steps or units which are not expressly listed or inherent to such a process, method, product, or device.

For ease of description, spatially relative terms, such as "above", "on the upper side of', "on the upper surface of' and "on", can be used to describe the spatial positional relationship between components or features shown in the figure. It should be understood that the spatially relative terms are intended to encompass different orientations of the components in use or operation in addition to those shown in the figure. For example, if a component in the figure is inverted, it is described as a component "above other component or structure" or "on other component or structure". Therefore, the component will be positioned as "below other component or structure" or "under other component or structure". Therefore, the exemplary term "above" may include both orientations "above" and "below". The component may also be positioned in other different ways (rotated by 90 degrees or in other orientations), but the relative description of the space should be explained accordingly.

The present disclosure provides a faux leather decoration. The faux leather decoration is disposed on a surface of a cosmetic container. Components of the faux leather decoration include a TPU elastomer.

Optionally, the faux leather decoration includes the following components in parts by weight: 84-99.5 parts of the TPU elastomer, 0.05-0.5 parts of an antioxidant, and 0.05-0.5 parts of a lubricant. The faux leather decoration is injection-molded with the TPU elastomer. The decoration exhibits a leather-like appearance and a leather-like tactile feel, and is attached to the surface of the cosmetic container, which not only protects the cosmetic container, but also delivers a leather-like visual impression to improve the grade of the product. The decoration is made of a plastic material, which is more durable and elastic than the leather. Compared with the conventional product made by pressing a silicone substrate and a surface faux leather, the decoration has high hardness and strong toughness, and is more durable.

The TPU elastomer includes the following components in parts by weight: 60-80 parts of a polyol, 16-31 parts of an isocyanate, and 3.5-9 parts of a chain extender. Optionally, there are 65-80 parts by weight of the polyol, 20-25 parts by weight of the isocyanate, and 5-7 parts by weight of the chain extender. Indicators of the TPU elastomer prepared with the above raw material ratio, such as hardness, elasticity, and elongation, can meet requirements for the faux leather decoration.

Optionally, the polyol includes at least one of poly(ethylene adipate) diol (PEA), poly(butylene adipate) diol, and poly(hexamethylene adipate) diol. The isocyanate includes at least one of hexamethylene diisocyanate, isophorone diisocyanate, 4,4'-dicyclohexylmethane diisocyanate, cyclohexane-1,4-diisocyanate, and decane-1,10-diisocyanate. The chain extender includes at least one of 1,4-butanediol, ethylene glycol, 1,2-propanediol, 1,3-propanediol, 2-methyl-1,3-propanediol, and 1,6-hexanediol.

Optionally, the antioxidant is at least one of a hindered phenol antioxidant, a hydroxylamine antioxidant, a thioether antioxidant, and a triazine antioxidant. The lubricant is at least one of an erucamide lubricant, an oleamide lubricant, and a stearate lubricant.

The antioxidant serves to inhibit thermo-oxidative aging in material production and material processing. The lubricant is beneficial for demolding in injection molding. The hindered phenol antioxidant includes antioxidant 1010, antioxidant 1024, antioxidant 1076, antioxidant 1135, antioxidant 1098, and antioxidant 245. A phosphite antioxidant includes antioxidant 168, antioxidant P-EPQ, antioxidant PEP-36, antioxidant 626, antioxidant 9228, and antioxidant DPDP. The thioether antioxidant includes antioxidant DSTP, antioxidant DLTP, and antioxidant DMTP. The triazine antioxidant includes antioxidant STA-1, antioxidant 565, and antioxidant 3114.

The TPU elastomer has a Shore hardness of 63-69 A. Optionally, the TPU elastomer has the Shore hardness of 65-69 A. Optionally, the TPU elastomer has the Shore hardness of 68 A. The TPU elastomer has a 100% modulus of greater than or equal to 2 MPa, and a 300% modulus of greater than or equal to 4 MPa. An elongation at break of the TPU elastomer is greater than or equal to 400%. The TPU elastomer has a tensile strength of greater than or equal to 10 MPa. The TPU elastomer has a density of 1.0-1.4 g/cm³. The TPU elastomer has a tear strength of greater than or equal to 40 kN/m.

The TPU elastomer has a Tg of -45°C to -40°C. The Tg is measured by differential scanning calorimetry (DSC) under a condition of 10 °C/min. Optionally, the TPU elastomer has following performance: The 100% modulus is 2-5 MPa, the 300% modulus is 4-8 MPa, the elongation at break is 600-800%, the density is 1.1-1.25 g/cm³, the tensile strength is 10-20 MPa, and the tear strength is 60-70 kN/m.

The components further include 0.3-10 parts by weight of color masterbatch. The color masterbatch includes a polyurethane elastomer, a polyolefin, a pigment, a filler, a dispersant, and the like. The pigment includes an inorganic pigment or an organic pigment. The inorganic pigment includes at least one of titanium dioxide, carbon black, and iron blue. The organic pigment includes one of an azo pigment, a phthalocyanine pigment, and a heterocyclic pigment. The color masterbatch prepared using the titanium dioxide as the pigment is white masterbatch. The color masterbatch prepared using carbon black as the pigment is black masterbatch. By adding the color masterbatch, not only can decorations of different colors be obtained, but also the toughness of the decoration can be improved.

The components further include 1-15 parts by weight of a polyolefin. The polyolefin as a toughener is added to raw materials. The decoration containing the polyolefin has good toughness. Therefore, the obtained decoration has the good hand feel and is tack-free.

The polyolefin includes at least one of PP, PE, a POE, an EVA, and MMA. The polypropylene is abbreviated as the PP, the polyethylene is abbreviated as the PE, the polyolefin elastomer is abbreviated as the POE, the ethylene-vinyl acetate copolymer is abbreviated as the EVA, and the methyl methacrylate is abbreviated as the MMA.

The components further include 0.1-0.5 parts by weight of an anti-tack agent. Optionally, the anti-tack agent accounts for 0.3 parts by weight.

The components further include 8 parts by weight of PE. The PE is high density polyethylene (HDPE) LH606.

The components further include 10 parts by weight of PE. The PE includes 5 parts by weight of PE8203 and 5 parts by weight of HDPE LH606, or the polyethylene includes 10 parts by weight of the HDPE LH606.

The components further include 10 parts by weight of PE and 5 parts by weight of universal black masterbatch. The polyethylene is HDPE LH606.

The components further include 5 parts by weight of a POE and 5 parts by weight of PE.

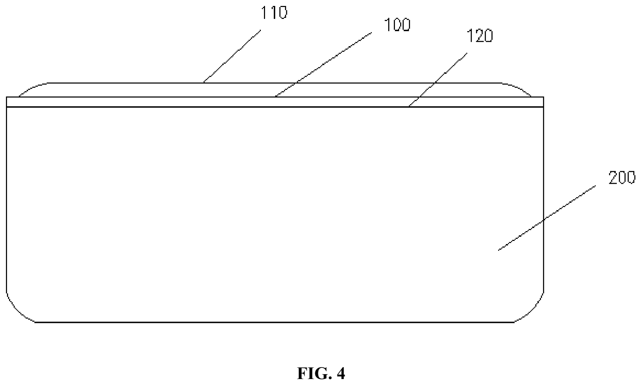

As shown in FIG. 4, a cosmetic container includes the faux leather decoration. The faux leather decoration is attached to an assembly surface of the cosmetic container 200. The assembly surface includes a flat surface or a curved surface. The assembly surface includes an upper surface and/or a peripheral side surface. That is, the decoration may be attached to the upper surface of the cosmetic container, or the peripheral side surface of the cosmetic container, or the upper surface and the peripheral side surface of the cosmetic container. The upper surface of the cosmetic container may be a flat surface or an arc-shaped surface. The peripheral side surface of the cosmetic container may be an arc-shaped surface. That is, the decoration may be attached to such assembly surface as the flat surface or the arc-shaped surface of the cosmetic container 200.

The decoration is assembled to the assembly surface of the cosmetic container 200 by bonding, snap-fitting, or hot-pressing. The faux leather decoration exhibits a leather-like appearance and a leather-like tactile feel, and is attached to the assembly surface of the cosmetic container, which not only protects the cosmetic container, but also delivers a leather-like visual impression to improve the grade of the product.

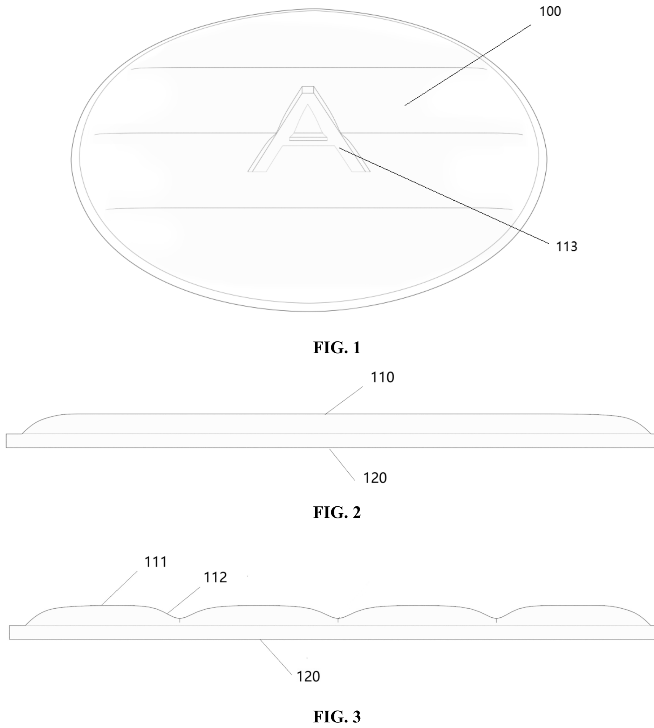

As shown in FIGS. 1-3, the faux leather decoration includes decoration body 100. The decoration body 100 includes decorative portion 113. The decorative portion 113 includes at least one of a protrusion, a groove, and a stitch line. The decorative portion 113 and the decoration body 100 are integrally formed by injection molding. The faux leather decoration includes the decoration body 100. The decoration body 100 includes first surface 110 and second surface 120 that are opposite to each other. The first surface 110 includes raised portion 111 and recessed portion 112 that are mutually spaced from each other. Projection of the recessed portion 112 on the second surface 120 is a coupling portion. The coupling portion is configured to couple the decoration body 100 and the cosmetic container 200. The first surface 110 of the decoration body 100 serves as an outer surface. The second surface 120 serves as an inner surface. The coupling portion serves as a portion of the second surface 120. Optionally, the coupling portion is a flat surface. The coupling portion is directly affixed to an outer surface of the cosmetic container through an adhesive or an adhesive tape, protecting and decorating the container through the first surface 110. The first surface 110 serves as a decorative outer surface. The decoration body 100 may be shaped according to a structure of the cosmetic container, and may be, for example, rectangular, square, elliptical, circular, etc. In addition to the decoration body, the decoration may further include other components. For example, a protective film may be attached to the first surface 110 of the decoration body 100 to protect a patch substrate, and an adhesive layer may be attached to the second surface 120 to affix the patch substrate to the surface of the cosmetic container. The decoration exhibits a leather-like appearance and a leather-like tactile feel, and is attached to the outer surface of the cosmetic container, which not only protects the cosmetic container, but also delivers a leather-like visual impression to improve the grade of the product. The decoration is made of a plastic material, which is more durable and elastic than the leather. Compared with the conventional product made by pressing a silicone substrate and a surface faux leather, the decoration has high hardness and strong toughness, and is more durable.

The decorative portion 113 is disposed on the first surface 110. The decorative portion 113 is recessed toward the second surface 120, or the decorative portion 113 protrudes from the raised portion 111. Letter A serves as the decorative portion 113 in FIG. 4. In actual application, the letter A may be made into any image. The decorative portion 113 may be an uppercase letter or a lowercase letter, a number, a Chinese character or other special symbols. The decoration is directly formed into the symbol, and is made simply and conveniently. The decorative portion of the decoration may be a consumer-favored decoration portion, and may also be a character containing a special meaning, thereby meeting diverse requirements of the consumer. In another possible implementation, a corresponding insert may be inlaid or affixed in a groove formed by the decorative portion 113. In other implementations, the decorative portion 113 may further be designed as the protrusion. The decorative portion 113 protrudes from the raised portion 11, namely the decorative portion is higher than the first surface 110, such that the consumer can touch the symbol, and the whole decoration is more stereoscopic and more innovative.

A cavity is formed between the decoration body 100 and the assembly surface of the cosmetic container 200. Due to the cavity between the decoration body 100 and the assembly surface of the container, when the decoration is pressed, a portion of the decoration having the cavity can deform, thereby improving the hand feel. The conventional leather material can deform through an intrinsic tension when pressed, while the faux leather decoration can achieve same deformation effect and hand feel as the leather through the cavity when pressed. Without the cavity, the material is hard when pressed, with a very low degree of deformation, and a poor hand feel, so requirements on the material of the decoration are relatively high.

The cavity may not be filled with any substance. Optionally, a soft filler is provided in the cavity. The filler includes sponge, foam, cotton, silicone, and other flexible materials.

The decorative portion 113 separates the cavity into M subcavities. A lower surface of the decorative portion 113 is attached to the assembly surface of the cosmetic container 200. M is greater than or equal to 2, and the M is an integer. That is, the lower surface of the decorative portion 113 protrudes toward the cosmetic container. The lower surface of the decorative portion 113 is attached to the assembly surface of the cosmetic container 200, so as to separate the cavity into two, three or more subcavities.

The decoration body 100 corresponding to the cavity is of a protruding arc-shaped structure. For any two points on the decoration body 100 corresponding to the cavity, if thicknesses of the decoration body 100 at the two points are respectively D1 and D2, a difference between the D1 and the D2 is less than a tolerance of the decoration body. That is, the decoration body 10 corresponding to the cavity is of the protruding arc-shaped structure with the same thickness.

A preparation method of the faux leather decoration includes following steps:
Preparation of TPU elastomer pellets: Raw materials are uniformly mixed, injected into a twin-screw extruder, and pelletized to obtain the TPU elastomer pellets. The raw materials include the polyol, the isocyanate, and the chain extender.

Injection molding of the faux leather decoration: The TPU elastomer pellets, the antioxidant, and the lubricant are injected into an injection molding machine, and injection-molded with the injection molding machine to obtain the faux leather decoration.

The preparation of TPU elastomer pellets includes following steps:
Material preparation: The raw materials are weighed according to a formulated amount. The raw materials include the polyol, the isocyanate, and the chain extender.
Degassing: The raw materials are degassed in a vacuum environment.
Mixing: The raw materials are put into a high-speed mixer, and uniformly stirred to obtain a mixture. The mixture is dried.
Pelletization: A dried mixture is added through a main feeding hopper of the twin-screw extruder, and subjected to plasticization, extrusion, strand pulling, air drying, and pelletization to obtain the TPU elastomer pellets.

The injection molding of the faux leather decoration includes following steps:
Batching: Materials are weighed according to a formulated amount. The materials include the TPU elastomer pellets, the antioxidant, and the lubricant.
Injection into the injection molding machine: The TPU elastomer pellets are injected into the injection molding machine, and hot-melted.
Addition of auxiliary materials: The antioxidant is added to the injection molding machine and uniformly mixed. Then, the lubricant is added to the injection molding machine and uniformly mixed to obtain a molten mixture.
Molding: The molten mixture is injected into a mold of the injection molding machine, and injection-molded to obtain the faux leather decoration. According to the present disclosure, the raw materials such as the polyol, the isocyanate, and the chain extender are degassed, mixed, dried, and pelletized with the twin-screw extruder to obtain the TPU elastomer pellets. Indicators of the TPU elastomer prepared with the special raw material ratio, such as hardness, elasticity, and elongation, can meet requirements for the faux leather decoration. At last, the TPU elastomer pellets obtained by the injection molding and the chemical additives such as the antioxidant and the lubricant are injection-molded through the injection molding machine to obtain the integrally formed faux leather decoration. Therefore, the decoration has the low production cost, facilitates the industrial large-scale production, and exhibits good wear resistance. The decoration is not prone to wear, and can keep the product aesthetically-pleasing for a long time.

The materials further include at least one of the polyolefin, the color masterbatch, and the anti-tack agent. During the injection into the injection molding machine, the at least one of the polyolefin, the color masterbatch, and the anti-tack agent is added to the injection molding machine, and hot-melted with the TPU elastomer pellets. During the injection molding, at least one of the polyolefin and the color masterbatch is added to the injection molding machine, and injection-molded with the TPU elastomer pellets to obtain the leather decoration, such that the toughness of the leather decoration can be improved, and the leather decoration is more comfortable in hand feel and tack-free. During the injection molding, either the polyolefin or the color masterbatch may be added alone, or the polyolefin and the color masterbatch may be added at the same time to obtain leather decorations of different colors.

During the degassing, the degassing time is 10-30 min. During the mixing, the mixture is dried at 80-95°C for 3-4 h.

### I. Preparation of the TPU elastomer and preparation of the faux leather decoration in examples

### Example 1:

The preparation of TPU elastomer pellets includes following steps:
Step 1: Material preparation: Raw materials were weighed according to a formulated amount. The raw materials included a polyol, an isocyanate, and a chain extender. A mass ratio of the polyol to the isocyanate to the chain extender was 71.8:22:6.2. The polyol was PEA. The isocyanate was 4,4'-methylenediphenyl diisocyanate (MDI). The chain extender was 1,4-butanediol.
Degassing: The raw materials were degassed in a vacuum environment for 15 min.
Mixing: The raw materials were put into a high-speed mixer, and uniformly stirred to obtain a mixture. The mixture was dried at 90°C for 3.5 h.
Pelletization: A dried mixture was added through a main feeding hopper of the twin-screw extruder, and subjected to plasticization, extrusion, strand pulling, air drying, and pelletization to obtain the TPU elastomer pellets.

### Example 2:

The preparation of the faux leather decoration includes the following steps:
92 parts by weight of the TPU elastomer pellets obtained in Example 1, 0.1 parts by weight of antioxidant 1010, and 0.2 parts by weight of an oleamide lubricant were injected into an injection molding machine, and injection-molded with the injection molding machine to obtain the faux leather decoration.

### Example 3:

The preparation of the faux leather decoration includes the following steps:
92 parts by weight of the TPU elastomer pellets obtained in Example 1, 5 parts by weight of low density polyethylene (LDPE) NA207-66, 0.1 parts by weight of antioxidant 1010, and 0.2 parts by weight of an oleamide lubricant were injected into an injection molding machine, and injection-molded with the injection molding machine to obtain the faux leather decoration.

### Example 4:

The preparation of the faux leather decoration includes the following steps:
92 parts by weight of the TPU elastomer pellets obtained in Example 1, 5 parts by weight of universal black masterbatch, 0.1 parts by weight of antioxidant 1010, and 0.2 parts by weight of an oleamide lubricant were injected into an injection molding machine, and injection-molded with the injection molding machine to obtain the faux leather decoration.

### Example 5:

The preparation of the faux leather decoration includes the following steps:
92 parts by weight of the TPU elastomer pellets obtained in Example 1, 7 parts by weight of universal black masterbatch, 0.1 parts by weight of antioxidant 1010, and 0.2 parts by weight of an oleamide lubricant were injected into an injection molding machine, and injection-molded with the injection molding machine to obtain the faux leather decoration.

### Example 6:

The preparation of the faux leather decoration includes the following steps:
92 parts by weight of the TPU elastomer pellets obtained in Example 1, 6 parts by weight of LDPE NA207-66, 0.1 parts by weight of antioxidant 1010, and 0.2 parts by weight of an oleamide lubricant were injected into an injection molding machine, and injection-molded with the injection molding machine to obtain the faux leather decoration.

### Example 7:

The preparation of the faux leather decoration includes the following steps:
92 parts by weight of the TPU elastomer pellets obtained in Example 1, 8 parts by weight of HDPE LH606, 0.1 parts by weight of antioxidant 1010, and 0.2 parts by weight of an oleamide lubricant were injected into an injection molding machine, and injection-molded with the injection molding machine to obtain the faux leather decoration.

### Example 8:

The preparation of the faux leather decoration includes the following steps:
92 parts by weight of the TPU elastomer pellets obtained in Example 1, 10 parts by weight of HDPE LH606, 5 parts by weight of universal black masterbatch, 0.1 parts by weight of antioxidant 1010, and 0.2 parts by weight of an oleamide lubricant were injected into an injection molding machine, and injection-molded with the injection molding machine to obtain the faux leather decoration.

### Example 9:

The preparation of the faux leather decoration includes the following steps:
92 parts by weight of the TPU elastomer pellets obtained in Example 1, 5 parts by weight of PE8203, 5 parts by weight of HDPE LH606, 0.1 parts by weight of antioxidant 1010, and 0.2 parts by weight of an oleamide lubricant were injected into an injection molding machine, and injection-molded with the injection molding machine to obtain the faux leather decoration.

### Example 10:

The preparation of the faux leather decoration includes the following steps:
92 parts by weight of the TPU elastomer pellets obtained in Example 1, 7 parts by weight of PE8203, 3 parts by weight of HDPE LH606, 0.1 parts by weight of antioxidant 1010, and 0.2 parts by weight of an oleamide lubricant were injected into an injection molding machine, and injection-molded with the injection molding machine to obtain the faux leather decoration.

### Example 11:

The preparation of the faux leather decoration includes the following steps:
92 parts by weight of the TPU elastomer pellets obtained in Example 1, 3 parts by weight of PE8203, 7 parts by weight of HDPE LH606, 0.1 parts by weight of antioxidant 1010, and 0.2 parts by weight of an oleamide lubricant were injected into an injection molding machine, and injection-molded with the injection molding machine to obtain the faux leather decoration.

### Example 12:

The preparation of the faux leather decoration includes the following steps:
92 parts by weight of the TPU elastomer pellets obtained in Example 1, 8 parts by weight of PP, 0.1 parts by weight of antioxidant 1010, and 0.2 parts by weight of an oleamide lubricant were injected into an injection molding machine, and injection-molded with the injection molding machine to obtain the faux leather decoration.

### Example 13:

The preparation of the faux leather decoration includes the following steps:
92 parts by weight of the TPU elastomer pellets obtained in Example 1, 3 parts by weight of PE8203, 5 parts by weight of PP, 0.1 parts by weight of antioxidant 1010, and 0.2 parts by weight of an oleamide lubricant were injected into an injection molding machine, and injection-molded with the injection molding machine to obtain the faux leather decoration.

### Example 14:

The preparation of the faux leather decoration includes the following steps:
92 parts by weight of the TPU elastomer pellets obtained in Example 1, 10 parts by weight of HDPE LH606, 0.1 parts by weight of antioxidant 1010, and 0.2 parts by weight of an oleamide lubricant were injected into an injection molding machine, and injection-molded with the injection molding machine to obtain the faux leather decoration.

### Example 15:

The preparation of the faux leather decoration includes the following steps:
92 parts by weight of the TPU elastomer pellets obtained in Example 1, 5 parts by weight of a POE Queo8203, 5 parts by weight of HDPE LH606, 0.1 parts by weight of antioxidant 1010, and 0.2 parts by weight of an oleamide lubricant were injected into an injection molding machine, and injection-molded with the injection molding machine to obtain the faux leather decoration.

### Example 16:

The preparation of the faux leather decoration includes the following steps:
92 parts by weight of the TPU elastomer pellets obtained in Example 1, 7 parts by weight of a POE Queo8203, 3 parts by weight of HDPE LH606, 0.1 parts by weight of antioxidant 1010, and 0.2 parts by weight of an oleamide lubricant were injected into an injection molding machine, and injection-molded with the injection molding machine to obtain the faux leather decoration.

### Example 17:

The preparation of the faux leather decoration includes the following steps:
92 parts by weight of the TPU elastomer pellets obtained in Example 1, 3 parts by weight of a POE Queo8203, 7 parts by weight of HDPE LH606, 0.1 parts by weight of antioxidant 1010, and 0.2 parts by weight of an oleamide lubricant were injected into an injection molding machine, and injection-molded with the injection molding machine to obtain the faux leather decoration.

The LDPE NA207-66 is produced by the USI Corporation.

The HDPE LH606 is produced by the USI Corporation.

The PE8203 is produced by the Borealis.

The POE Queo8203 is produced by the Borealis.

The PP is produced by the LCY Chemical Corporation.

### II. Detection in the examples

1. Test data in Example 1 are shown in Table 1 below:

**Table 1:**

| Physical property | Test method | Unit | Value |
|---|---|---|---|
| Density | ASTM D792 | g/cm³ | 1.18 |
| Hardness | ASTM D2240 | Shore A | 68 |
| Tensile strength | ASTM D412 | MPa | 20 |
| 100% modulus | ASTM D412 | MPa | 3 |
| 300% modulus | ASTM D412 | MPa | 5 |
| Elongation at break | ASTM D412 | MPa | 650 |
| Tear strength | ASTM D624 | kN/m | 55 |
| Thermodynamic property Tg (DSC, 10 °C/min) | DSC | °C | -40 |

**2. For detection on toughness in Example 2-17, see Table 2 below:**

**Table 2:**

| No. | Polyurethane elastomer, parts by weight | Universal black masterbatch, parts by weight | Polyolefin, parts by weight | Antioxidant 1010, parts by weight | Lubricant, parts by weight | Tackiness | Hardness |
|---|---|---|---|---|---|---|---|
| Example 2 | 92 | / | / | 0.1 | 0.2 | Tacky | Relatively hard |
| Example 3 | 92 | / | LDPE,5 | 0.1 | 0.2 | Tack-free | Moderate |
| Example 4 | 92 | 5 | / | 0.1 | 0.2 | Tack-free | Moderate |
| Example 5 | 92 | 7 | / | 0.1 | 0.2 | Tack-free | Moderate |
| Example 6 | 92 | / | LDPE,6 | 0.1 | 0.2 | Tack-free | Moderate |
| Example 7 | 92 | / | HDPE,8 | 0.1 | 0.2 | Tack-free | Moderate |
| Example 8 | 92 | 5 | HDPE,10 | 0.1 | 0.2 | Tack-free | Relatively hard |
| Example 9 | 92 | / | PE8203, 5 +HDPE,5 | 0.1 | 0.2 | Tack-free | Moderate |
| Example 10 | 92 | / | PE8203, 7 +HDPE,5 | 0.1 | 0.2 | Tack-free | Soft |
| Example 11 | 92 | / | PE8203, 3 +HDPE,7 | 0.1 | 0.2 | Tack-free | Moderate |
| Example 12 | 92 | / | PP,8 | 0.1 | 0.2 | Tack-free | Moderate |
| Example 13 | 92 | / | PE8203, 3+PP,5 | 0.1 | 0.2 | Tack-free | Moderate |
| Example 14 | 92 | / | HDPE,10 | 0.1 | 0.2 | Tack-free | Moderate |
| Example 15 | 92 | / | POE,5+HDPE,5 | 0.1 | 0.2 | Tack-free | Moderate |
| Example 16 | 92 | / | POE,7+HDPE,3 | 0.1 | 0.2 | Tack-free | Moderate |
| Example 17 | 92 | / | POE,3+HDPE,7 | 0.1 | 0.2 | Tack-free | Moderate |

The polyolefin or the masterbatch is not added in Example 2, but the polyolefin and/or the masterbatch is added in Examples 3-17. Compared with Example 2, the hand feel is improved, and the surface is finer, softer, and tack-free in Examples 3-17. The surface of the decoration is relatively hard in Example 8, relatively soft in Example 10, and moderate in other examples. That is, compared with Example 2, the toughness is improved in Examples 3-17. Hence, the polyolefin or the masterbatch can improve the toughness of the decoration.

It should be noted that those of ordinary skill in the art can further make variations and improvements without departing from the conception of the present disclosure. These variations and improvements all fall within the protection scope of the present disclosure. Therefore, the protection scope of the present disclosure shall be subject to the appended claims.

## Claims

1. A faux leather decoration, wherein the faux leather decoration is disposed on a surface of a cosmetic container; and components of the faux leather decoration comprise a thermoplastic polyurethane (TPU) elastomer.

2. The faux leather decoration according to claim 1, comprising following components in parts by weight: 84-99.5 parts of the TPU elastomer, 0.05-0.5 parts of an antioxidant, and 0.05-0.5 parts of a lubricant.

3. The faux leather decoration according to claim 1, wherein the TPU elastomer comprises following components in parts by weight: 60-80 parts of polyol, 16-31 parts of isocyanate, and 3.5-9 parts of a chain extender.

4. The faux leather decoration according to claim 1, wherein the TPU elastomer has a Shore hardness of 63-69 A.

5. The faux leather decoration according to claim 1, wherein the TPU elastomer has a 100% modulus of greater than or equal to 2 MPa, and a 300% modulus of greater than or equal to 4 MPa.

6. The faux leather decoration according to claim 1, wherein an elongation at break of the TPU elastomer is greater than or equal to 400%.

7. The faux leather decoration according to claim 1, wherein the TPU elastomer has a tensile strength of greater than or equal to 10 MPa.

8. The faux leather decoration according to claim 1, wherein the TPU elastomer has a density of 1.0-1.4 g/cm³.

9. The faux leather decoration according to claim 1, wherein the TPU elastomer has a tear strength of greater than or equal to 40 kN/m.

10. The faux leather decoration according to claim 1, wherein the TPU elastomer has a glass transition temperature (Tg) of -45°C to -40°C.

11. The faux leather decoration according to any one of claims 1 to 10, wherein the components further comprise 0.3-10 parts by weight of color masterbatch.

12. The faux leather decoration according to claim 11, wherein the components further comprise 1-15 parts by weight of polyolefin.

13. The faux leather decoration according to claim 12, wherein the polyolefin comprises at least one of polypropylene (PP), polyethylene (PE), a polyolefin elastomer (POE), an ethylene-vinyl acetate copolymer (EVA), and methyl methacrylate (MMA).

14. The faux leather decoration according to claim 12, wherein the components further comprise 0.1-0.5 parts by weight of an anti-tack agent.

15. The faux leather decoration according to claim 14, wherein the components further comprise 8 parts by weight of PE.

16. The faux leather decoration according to claim 14, wherein the components further comprise 10 parts by weight of PE.

17. The faux leather decoration according to claim 14, wherein the components further comprise 10 parts by weight of PE and 5 parts by weight of universal black masterbatch.

18. The faux leather decoration according to claim 14, wherein the components further comprise 5 parts by weight of a POE and 5 parts by weight of PE.

19. A cosmetic container, comprising: the faux leather decoration according to any one of claims 1 to 18, wherein the faux leather decoration is attached to an assembly surface of the cosmetic container (200); and the assembly surface comprises a flat surface or a curved surface.

20. The cosmetic container according to claim 19, wherein the decoration is assembled to the assembly surface of the cosmetic container (200) by bonding, snap-fitting, or hot-pressing.

21. The cosmetic container according to claim 19, wherein the faux leather decoration comprises a decoration body (100); the decoration body (100) comprises a decorative portion (113); and the decorative portion (113) comprises at least one of a protrusion, a groove, and a stitch line.

22. The cosmetic container according to claim 21, wherein a cavity is formed between the decoration body (100) and the assembly surface of the cosmetic container (200).

23. The cosmetic container according to claim 22, wherein a soft filler is provided in the cavity.

24. The cosmetic container according to claim 22, wherein the decoration body (100) corresponding to the cavity is of a protruding arc-shaped structure; and for any two points on the decoration body (100) corresponding to the cavity, if thicknesses of the decoration body (100) at the two points are respectively D1 and D2, a difference between the D1 and the D2 is less than a tolerance of the decoration body.

25. A preparation method of the faux leather decoration according to any one of claims 1 to 18, comprising following steps:
preparation of thermoplastic polyurethane (TPU) elastomer pellets: uniformly mixing raw materials, injecting a mixture into a twin-screw extruder, and pelletizing the mixture to obtain the TPU elastomer pellets, wherein the raw materials comprise polyol, isocyanate, and a chain extender; and
injection molding of the faux leather decoration: injecting the TPU elastomer pellets, the antioxidant, and a lubricant into an injection molding machine, and performing injection molding with the injection molding machine to obtain the faux leather decoration.

26. The preparation method according to claim 25, wherein the preparation of TPU elastomer pellets comprises following steps:
material preparation: weighing the raw materials according to a formulated amount, wherein the raw materials comprise the polyol, the isocyanate, and the chain extender;
degassing: degassing the raw materials in a vacuum environment;
mixing: putting the raw materials into a high-speed mixer, uniformly stirring the raw materials to obtain the mixture, and drying the mixture; and
pelletization: adding the dried mixture through a main feeding hopper of the twin-screw extruder, and performing plasticization, extrusion, strand pulling, air drying, and pelletization to obtain the TPU elastomer pellets.

27. The preparation method according to claim 25, wherein the injection molding of the faux leather decoration comprises following steps:
batching: weighing materials according to a formulated amount, wherein the materials comprise the TPU elastomer pellets, the antioxidant, and the lubricant;
injection into the injection molding machine: injecting the TPU elastomer pellets into the injection molding machine, and hot-melting the TPU elastomer pellets.
addition of auxiliary materials: adding the antioxidant to the injection molding machine and uniformly mixing; and then adding the lubricant to the injection molding machine and uniformly mixing to obtain a molten mixture; and
molding: injecting the molten mixture into a mold of the injection molding machine, and injection-molding the molten mixture to obtain the faux leather decoration.

28. The preparation method according to claim 27, wherein the materials further comprise at least one of the polyolefin, color masterbatch, and an anti-tack agent; and during the injection into the injection molding machine, the at least one of the polyolefin, the color masterbatch, and the anti-tack agent is added to the injection molding machine, and hot-melted with the TPU elastomer pellets.
